# FASCICULE DE BREVET EUROPEEN

(11) **EP 2 585 701 B1**
(45) Date de publication et mention de la délivrance du brevet: **31.08.2016**
(21) Numéro de dépôt: 11797678.7
(22) Date de dépôt: 07.06.2011
(51) Int. Cl.: F02D 41/02, F01N 3/20, F02D 41/30, F01N 3/08

(54) **PROCEDE D'ADAPTATION DES REGLAGES D'UN MOTEUR SUR LA CONSOMMATION D'AGENT REDUCTEUR D'OXYDES D'AZOTE**
VERFAHREN ZR ANPASSUNG DER EINSTELLUNGEN EINES MOTORS AUF GRUNDLAGE DES VERBRAUCHS EINES STICKOXIDREDUKTIONSMITTELS
METHOD FOR ADAPTING THE SETTINGS OF AN ENGINE ON THE BASIS OF THE CONSUMPTION OF A NITROGEN-OXIDE REDUCING AGENT

(30) Priorité: 22.06.2010 FR 1054964
(43) Date de publication de la demande: 01.05.2013
(73) Titulaire: Peugeot Citroën Automobiles SA, 78140 Vélizy Villacoublay (FR)
(72) Inventeur: BOISSARD, Romain, F-78000 Versailles (FR); MAESSE, Pierre-Henri, F-92500 Rueil Malmaison (FR); NOVATI, Jean, 78420 Carrieres sur Seine (FR); DUBOIS, Vincent, F-92200 Neuilly sur Seine (FR); CHEMISKY, Jean-Pierre, F-92150 Suresnes (FR)
(74) Mandataire: Renous Chan, Véronique
(86) Numéro de dépôt international: PCT/FR2011/051289
(87) Numéro de publication internationale: WO 2011/161351

(56) Documents cités:
- EP-A1- 2 017 442
- WO-A1-2009/001195
- FR-A3- 2 930 282
- US-A1- 2006 184 307
- US-A1- 2007 163 244
- US-A1- 2008 098 726

## Description

La présente invention revendique la priorité de la demande française 1054964 déposée le 22 juin 2010 dont le contenu (texte, dessins et revendications) est ici incorporé par référence.

L'invention se rapporte à un procédé d'adaptation des réglages d'un moteur sur la consommation d'agent réducteur d'oxydes d'azote à bord d'un véhicule.

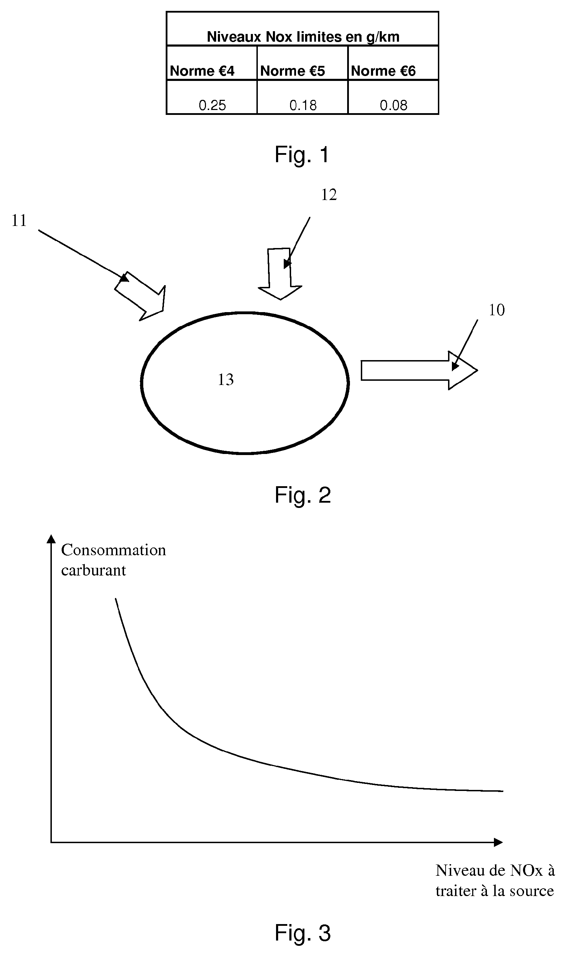

Les niveaux de polluants émis par les véhicules sont soumis à réglementation. Parmi ces polluants les oxydes d'azote NOₓ sont plus particulièrement réglementés. Le tableau en figure 1 présente des normes d'émission de NOₓ. Les normes d'émission d'oxydes d'azote par un véhicule sont de plus en plus contraignantes. Ainsi, la norme €6 impose un niveau de NOₓ limite de 0,08 g/km sur un parcours homologué de référence.

Comme présenté en figure 2, les oxydes d'azote 10 sont générés par la combustion 13 au sein de la chambre de combustion du moteur. Les niveaux d'émission d'oxydes d'azote 10 sont fonction du réglage appliqué sur la boucle d'air 11 et la boucle carburant 12.

Pour diminuer le niveau d'émissions d'oxydes d'azote, ces derniers peuvent être traités en sortie du moteur via des systèmes de post-traitement. La quantité d'oxydes d'azote émis par un véhicule est donc égale à la quantité d'oxydes d'azote émis à la source, c'est-à-dire à la sortie du moteur, moins la quantité d'oxydes d'azote traitée par le système de post traitement. Par exemple, le système de post-traitement des gaz d'échappement du moteur peut comprendre une réduction catalytique sélective (SCR pour Selective Catalyst reduction en anglais) à l'aide d'un agent réducteur provenant d'un réservoir d'agent réducteur. L'agent réducteur peut être de l'urée.

La figure 3 présente le niveau de consommation en carburant en fonction du niveau d'oxydes d'azote à traiter à la source à un point de fonctionnement du moteur. Cette balance NOₓ/consommation est dépendante du réglage en air et en carburant. Pour un certain réglage air et carburant, on peut en effet augmenter la quantité de NOₓ, mais diminuer la consommation de carburant et vice-versa.

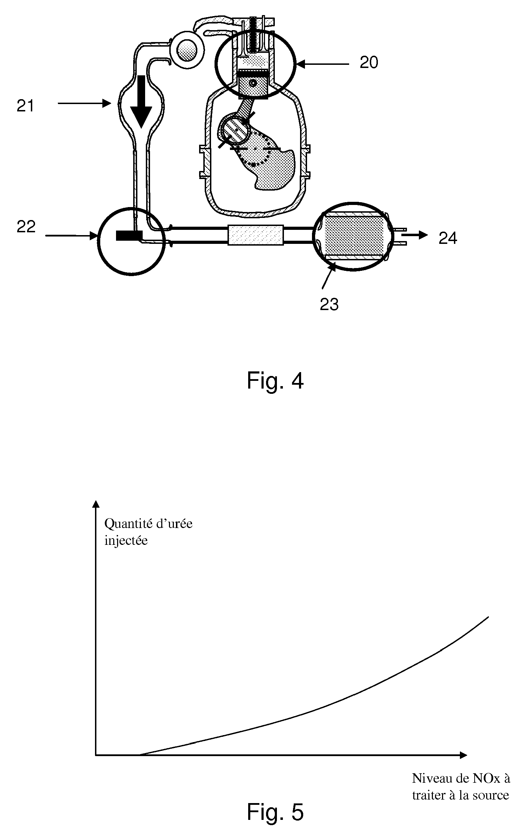

Un exemple de système de post-traitement utilisant la réduction catalytique sélective est présenté en figure 4. A l'étape 20, une formation d'oxydes d'azote a lieu dans la chambre de combustion du moteur. A l'étape 21, l'oxydes d'azote est acheminé dans des conduites. A l'étape 22, un agent réducteur tel que l'urée est injecté dans la conduite. A l'étape 23, l'oxydes d'azote subi un post-traitement par réduction catalytique sélective ou SCR. A l'étape 24, les gaz d'échappement sont évacués avec un niveau d'oxydes d'azote diminué après réduction par dans la réduction catalytique sélective.

Le système de réduction catalytique sélective fonctionne grâce à l'injection d'agent réducteur en amont de la réduction catalytique sélective. L'agent réducteur permet la réduction des oxydes d'azote par la réduction catalytique sélective. La figure 5 présente la consommation en agent réducteur (ici de l'urée) en fonction du niveau d'oxydes d'azote à traiter. On observe que plus le niveau d'oxydes d'azote à traiter est important, plus la quantité d'urée à injecter est importante. Les niveaux d'oxydes d'azote émis à la source par la combustion du moteur peuvent donc être traités dans une certaine limite, qui dépend du dimensionnement du réservoir d'agent réducteur.

Pour un dimensionnement du réservoir d'agent réducteur donné, il est donc possible de traiter les oxydes d'azote pendant une certaine durée de fonctionnement du moteur. Lorsque le réservoir d'agent réducteur est vide, le système SCR n'est plus capable de traiter les oxydes d'azote. Les niveaux d'émissions d'oxydes d'azote exigés par la norme ne peuvent plus être respectés.

Dans ce cas de figure, le contrôleur du moteur n'autorise plus le fonctionnement du moteur. Le véhicule est alors immobilisé, sans possibilité de pouvoir redémarrer afin de respecter la contrainte réglementaire sur l'émission d'oxydes d'azote.

Il est recherché un procédé de gestion de l'agent réducteur permettant d'optimiser la consommation en carburant et la consommation en agent réducteur.

Les documents EP 2 017 442, US2006184307, US2008098726, WO09001195, FR2929644, FR2903728, et FR2930282 présentent des procédés de gestion de l'agent réducteur. Aucun de ces documents ne présente un procédé permettant de gérer la consommation en agent réducteur et la consommation en carburant.

Il y a donc un besoin pour une gestion plus efficace de la consommation en carburant et de la consommation en agent réducteur.

Pour cela, l'invention propose un procédé d'adaptation des réglages d'un moteur sur la consommation d'agent réducteur d'oxydes d'azote à bord d'un véhicule, le véhicule comprenant un moteur et un réservoir d'agent réducteur d'oxydes d'azote, le procédé comprenant l'estimation d'une distance restante à parcourir par le véhicule avant que le réservoir d'agent réducteur soit vide en fonction de l'historique de la consommation en agent réducteur, la comparaison de l'estimation de la distance restante avec une distance prédéterminée, le réglage en air et en carburant injectés dans le moteur en fonction de la comparaison, le réglage de l'injection d'agent réducteur en fonction du réglage en air et en carburant injectés, selon la revendication 1.

Par modification des réglages, on entend une modification des quantités d'air et/ou de carburant et/ou une modification du moment et de la façon d'injecter

Selon une variante, le réglage d'air et de carburant est tel que la distance restante pour le véhicule soit égale à la distance prédéterminée.

Selon une variante, si l'estimation de la distance restante est supérieure à la distance prédéterminée, les réglages en air et en carburant sont ajustés de façon à diminuer la quantité de carburant injecté.

Selon une variante, si l'estimation de la distance restante est inférieure à la distance prédéterminée, les réglages en air et en carburant sont ajustés de façon à augmenter la quantité de carburant injecté.

Selon une variante, un signal d'alerte est déclenché si le niveau du réservoir d'agent réducteur est inférieur à une valeur seuil prédéterminée.

Selon une variante, le moteur du véhicule est mis hors de fonctionnement si le niveau du réservoir d'agent réducteur est nul.

Selon une variante, l'agent réducteur est de l'urée.

Selon une variante, l'estimation de la distance restante à parcourir est effectuée à intervalle de temps régulier ou à intervalle de distance parcourue régulier.

Selon une variante, le réglage en air et en carburant injectés dans le moteur est aussi en fonction de l'atteinte d'un seuil de niveau d'agent réducteur dans le réservoir d'agent prédéterminé.

L'invention se rapporte aussi à un véhicule comprenant un moteur et un réservoir d'agent réducteur d'oxydes d'azote, caractérisé en ce que le véhicule est spécialement conçu pour la mise en oeuvre du procédé décrit précédemment.

D'autres caractéristiques et avantages de l'invention apparaîtront à la lecture de la description détaillée qui suit des modes de réalisation de l'invention, donnés à titre d'exemple uniquement et en références aux dessins qui montrent :
- figure 1, l'indication des niveaux de NOₓ limites selon les normes applicables ;
- figures 2 et 4, un schéma relatif à la production de NOₓ dans un moteur ;
- figure 3, la consommation de carburant en fonction du niveau de NOₓ à la source ;
- figure 5, la quantité d'agent réducteur injectée en fonction du niveau de NOₓ à la source ;
- figure 6, un système d'alerte relativement à la quantité d'agent réducteur disponible ;
- figure 7, un schéma du procédé selon l'invention.
- figures 8 à 13 et 14 à 18, des courbes d'adaptation des réglages moteur dans deux exemples de roulage du véhicule.

L'invention se rapporte à un procédé d'adaptation des réglages d'un moteur sur la consommation d'agent réducteur d'oxydes d'azote à bord d'un véhicule. Plus particulièrement, le procédé de l'invention a pour objet de modifier le niveau d'oxydes d'azote émis à la source en fonction de la consommation en agent réducteur. Le procédé comprend l'estimation d'une distance restante à parcourir par le véhicule avant que le réservoir d'agent réducteur soit vide en fonction de l'historique de la consommation en agent réducteur, la comparaison de l'estimation de la distance restante avec une distance prédéterminée, le réglage d'air et de carburant injectés dans le moteur en fonction de la comparaison, le réglage de l'injection d'agent réducteur en fonction du réglage d'air et de carburant injectés. réglage de la quantité d'air et de la quantité de carburant injectées.

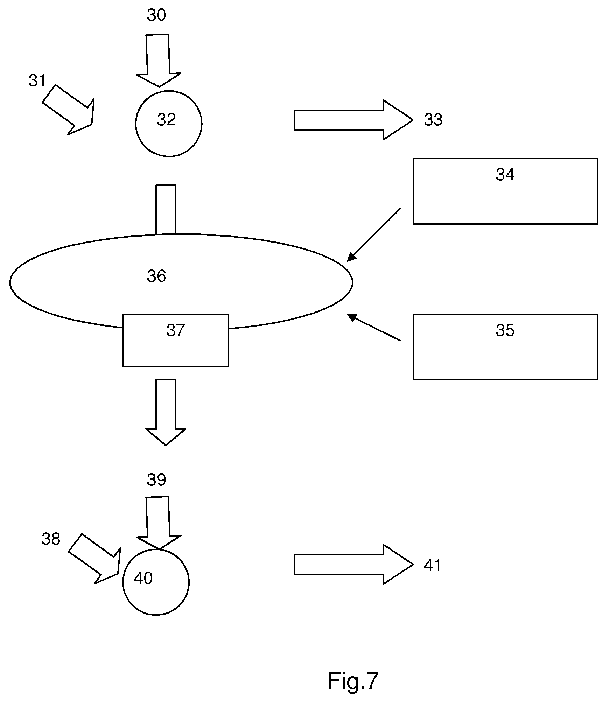

Le procédé comprend donc l'adaptation des réglages du moteur aux informations de consommation d'agent réducteur et l'adaptation de la quantité d'agent réducteur injectée à ces nouveaux réglages du moteur. La figure 7 permet de mieux comprendre l'objet de l'invention.

Un réglage en air standard 30, et un réglage en carburant standard 31 permettent une combustion 32 dans la chambre du moteur. La combustion 32 entraîne des émissions d'oxydes d'azote 33 à un certain niveau.

A partir des informations de consommation en agent réducteur 34, c'est-à-dire de l'historique de la consommation d'agent réducteur, et des informations de niveau d'agent réducteur 35, on procède à la vérification 36 de la consommation en agent réducteur et du niveau d'agent réducteur dans le réservoir. Autrement dit, on vérifie que la consommation en agent réducteur et le niveau d'agent réducteur dans le réservoir permettent d'atteindre un objectif de durabilité entre deux remplissages du réservoir d'agent réducteur. L'historique de la consommation est enregistré dans une mémoire et permet de retracer l'évolution de l'utilisation de l'agent réducteur en fonction de l'utilisation du véhicule par l'utilisateur.

Ensuite, les réglages en air et en carburant sont adaptés si besoin. En d'autres termes, les réglages en air et en carburant dans le moteur sont adaptés en fonction de la vérification précédente. Ces réglages sont mis en oeuvre par l'intermédiaire d'un contrôle 37 du moteur.

Ainsi, un réglage en air optimisé 38 et un réglage en carburant optimisé 39 permettent une combustion 40. La combustion 40 entraîne des émissions en oxydes d'azote modifiées 41, c'est-à-dire ayant un niveau différent de celui des émissions initiales 33. L'émission différente d'oxydes d'azote implique une modification de l'injection d'agent réducteur et donc une modification de la consommation à venir d'agent.

La quantité de NOₓ émise dans la chambre de combustion peut être détectée par un capteur positionné en sortie de la chambre de combustion et/ou en bout de ligne d'échappement. Il est aussi envisageable de déterminer la quantité de NOₓ émise dans la chambre de combustion grâce à des cartographies enregistrées dans le calculateur du moteur. Ces cartographies prennent en compte le réglage du moteur et notamment le couple disponible, le régime, la quantité d'air et de carburant injectée, le moment d'injection, la pression d'injection, et éventuellement d'autres paramètres comme par exemple les conditions de températures et de pression.

Les informations de consommation en agent réducteur 34 et les informations de niveau d'agent réducteur 35 dépendent du profil de roulage du véhicule. En effet, le niveau d'oxydes d'azote 33 émis à la source est dépendant du type de roulage de l'utilisateur, c'est-à-dire des points de fonctionnement régime-charge de l'utilisateur (le terme charge pouvant être remplacé par couple). Or, la consommation en agent réducteur est fonction du niveau d'oxydes d'azote 33 émis à la source. La quantité d'agent réducteur à injecter pour traiter les oxydes d'azote dépend donc du type de roulage. L'évolution du niveau d'agent réducteur dépend donc du profil de roulage.

Le procédé de l'invention permet donc d'adapter les réglages du moteur en fonction du profil de roulage de l'utilisateur. Ainsi, le procédé permet d'offrir à l'utilisateur un intervalle de remplissage d'agent réducteur allongé dans le cas d'un profil de roulage sévère, c'est-à-dire en forts régimes / fortes charges. Alternativement, le procédé permet une amélioration de certaines prestations (par exemple de la consommation en carburant) dans le cas d'un profil favorable, c'est-à-dire présentant de faibles régimes et de faibles charges.

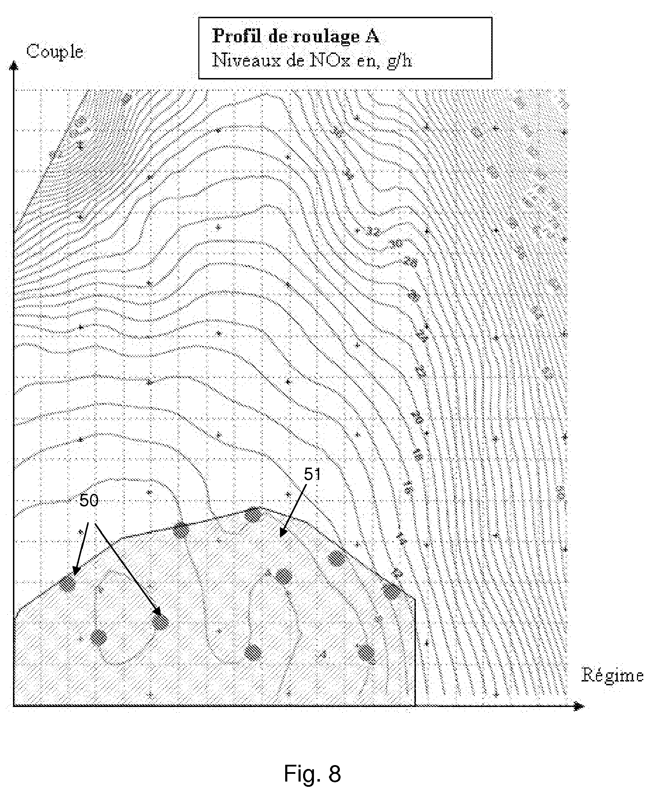

La figure 8 présente un premier exemple de profil de roulage A. Le régime est présenté en abscisse, le couple est présenté en ordonnées, et les niveaux d'émissions en oxydes d'azote correspondant à une paire régime-couple sont représentés par des lignes de niveau. Les niveaux d'émissions en oxydes d'azote sont exprimés en g/h. Les points 50 représentent les points de fonctionnement type du roulage de l'utilisateur. On observe que les points de fonctionnement 50 sont rassemblés dans la partie basse du graphe, dans la zone 51 (partie hachurée). L'utilisateur a donc un profil de roulage peu sévère, c'est-à-dire avec de faibles régimes et de faibles couples.

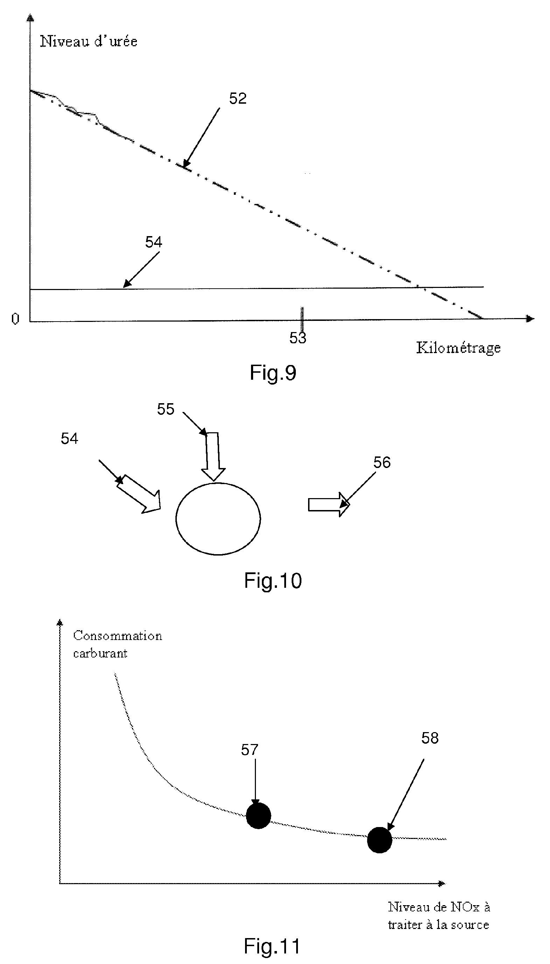

Le calcul de la consommation en agent réducteur et de l'évolution du niveau d'agent réducteur dans le réservoir permet d'obtenir une projection sur le kilométrage maximum réalisable par l'utilisateur avant la nécessité d'un remplissage du réservoir d'agent réducteur. La figure 9 représente la projection du niveau d'agent réducteur 52. La droite 54 représente le seuil de niveau bas du réservoir d'agent réducteur. La projection de niveau d'agent réducteur 52 indique une distance supérieure à l'objectif 53 de durabilité entre deux remplissages. Dans cette situation, le gain est en consommation d'agent réducteur.

Selon les figures 10 et 11, le procédé va impliquer une baisse de la consommation de carburant. Il est procédé à une modification du réglage en air 55 et en carburant 56 injectés dans le moteur afin de baisser la consommation de carburant. Ceci a pour conséquence le passage d'un niveau nominal 57 d'oxydes d'azote émis à la source à un niveau 58 plus élevé. L'augmentation du niveau de NOₓ à la source implique que la quantité d'agent réducteur injectée est augmentée.

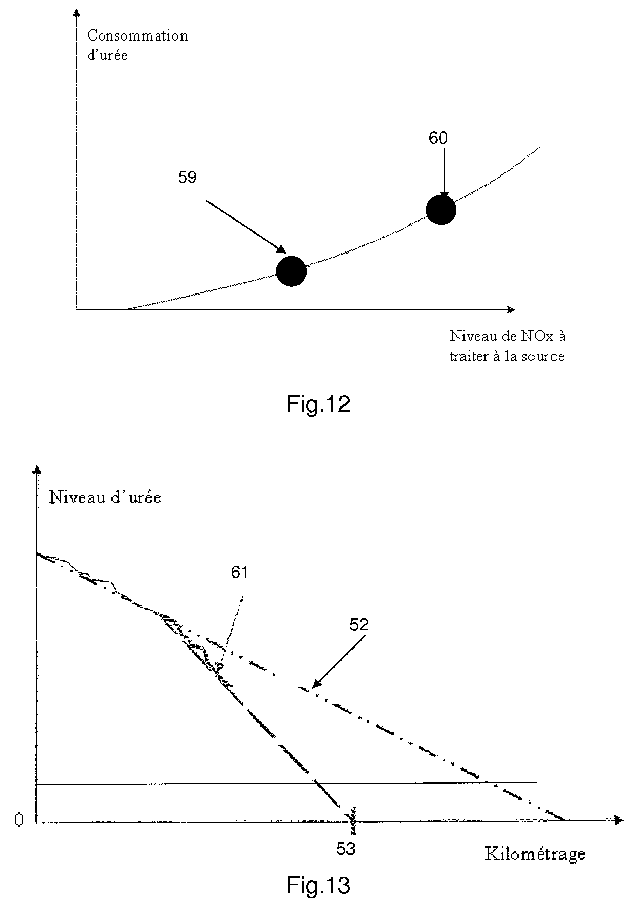

La figure 12 montre le passage d'un niveau 59 d'oxydes d'azote émis à la source à un niveau 60 plus élevé. La consommation d'agent réducteur est ajustée sur le nouveau réglage pour compenser l'augmentation du niveau de NOₓ à la source. Ainsi, le procédé permet la diminution de la consommation de carburant au détriment de la consommation d'agent réducteur qui augmente (les perspectives de consommation d'agent réducteur montrant qu'une consommation plus importante est possible).

Selon la figure 13, sur le même roulage A, il en résulte une nouvelle évolution du niveau d'agent réducteur. De la courbe 52 initiale de perspective de consommation d'agent réducteur, l'augmentation de la consommation d'agent permet d'obtenir une nouvelle projection du niveau d'urée selon la droite 61 qui vise l'objectif 53 de durabilité entre deux remplissages.

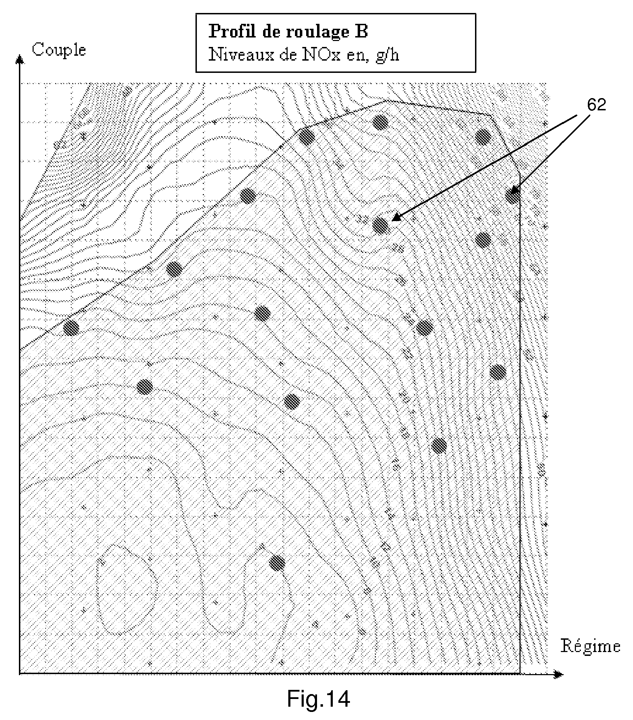

La figure 14 présente un deuxième exemple de profil de roulage B. Le régime est présenté en abscisse, le couple est présenté en ordonnées, et les niveaux d'émissions en oxydes d'azote correspondant à une paire régime-couple sont représentés par des lignes de niveau. Les niveaux d'émissions en oxydes d'azote sont exprimés en g/h. Les points 62 représentent les points de fonctionnement type du roulage de l'utilisateur. On observe que les points de fonctionnement 62 sont répartis sur le graphe. L'utilisateur a donc un profil de roulage plus sévère, c'est-à-dire avec de forts régimes et de forts couples.

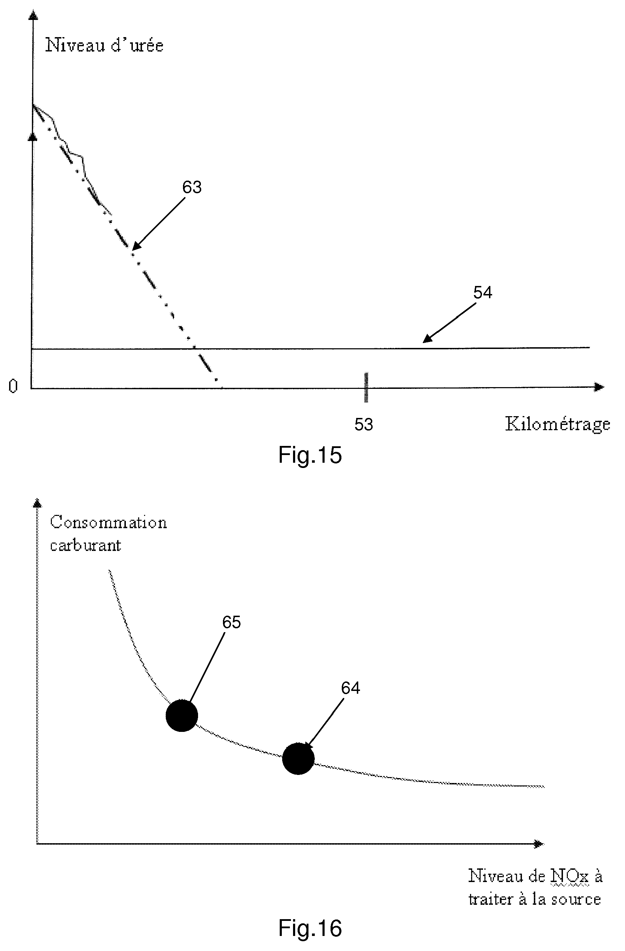

Le calcul de la consommation en agent réducteur et de l'évolution du niveau d'agent réducteur dans le réservoir permet d'obtenir une projection sur le kilométrage maximum réalisable par l'utilisateur avant la nécessité d'un remplissage du réservoir d'agent réducteur. La figure 15 représente la projection du niveau d'agent réducteur 63. La droite 54 représente toujours le seuil de niveau bas du réservoir d'agent réducteur. La projection de niveau d'agent réducteur 63 indique une distance inférieure à l'objectif 53 de durabilité entre deux remplissages. Dans cette situation, le gain est essentiellement en consommation de carburant.

Selon la figure 16, le procédé va impliquer une augmentation de la consommation de carburant. Il est procédé à une modification du réglage en air et en carburant injectés dans le moteur, la quantité de carburant injectée étant plus importante. Ceci a pour conséquence le passage d'un niveau nominal 64 d'oxydes d'azote émis à la source à un niveau 65 moins élevé. La diminution du niveau de NOₓ à la source implique que la quantité d'agent réducteur injectée est diminuée.

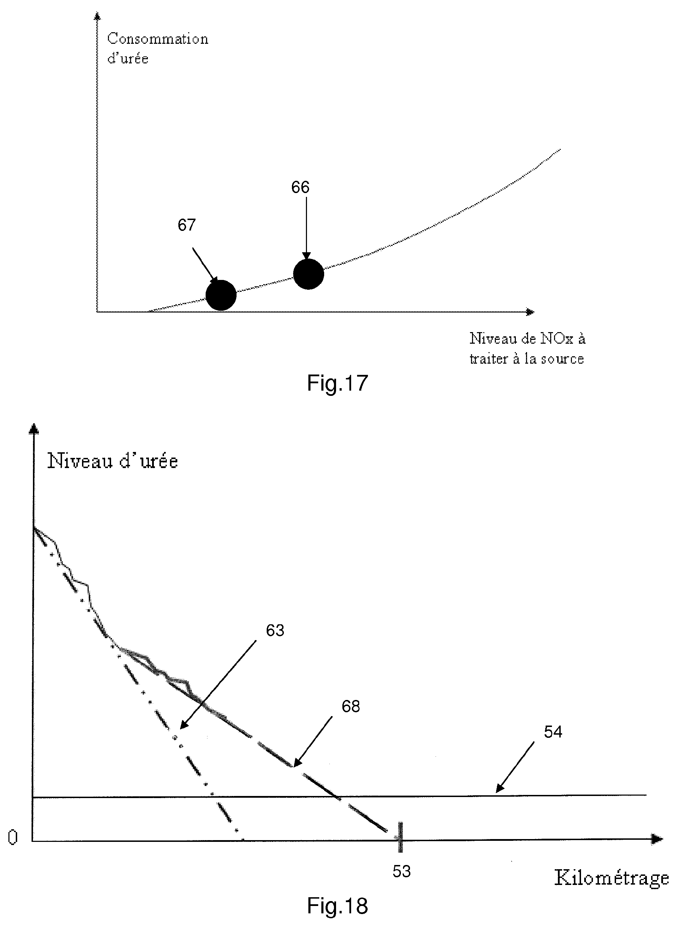

La figure 17 montre le passage d'un niveau 66 d'oxydes d'azote émis à la source à un niveau 67 moins élevé. La consommation d'agent réducteur est ajustée sur le nouveau réglage pour compenser la diminution du niveau de NOₓ à la source. Ainsi, le procédé permet la diminution de la consommation d'agent réducteur au détriment de la consommation de carburant qui augmente (les perspectives de consommation d'agent réducteur montrant qu'une consommation moins importante est souhaitée).

Selon la figure 18, sur le même roulage B, il en résulte une nouvelle évolution du niveau d'agent réducteur. De la courbe 63 initiale de perspective de consommation d'agent réducteur, la diminution de la consommation d'agent permet d'obtenir une nouvelle projection du niveau d'urée selon la droite 68 qui vise l'objectif 53 de durabilité entre deux remplissages.

D'une manière générale, l'estimation de la distance restante à parcourir est effectuée à intervalle de temps régulier ou à intervalle de distance parcourue régulier. A intervalle de temps ou de distance donné, la projection d'évolution du niveau d'agent réducteur peut induire une modification du réglage. Ceci permet d'adapter la consommation d'urée et de carburant à mesure de l'utilisation du véhicule.

Egalement, et comme indiqué en figure 7, il est envisageable d'adapter les réglages en air et en carburant injectés dans le moteur aussi en fonction des l'atteinte d'un seuil de niveau d'agent réducteur dans le réservoir d'agent prédéterminé (informations de niveau d'agent réducteur 35). Il s'agit par exemple de l'atteinte d'un seuil de niveau bas, ce qui permet d'augmenter l'autonomie du véhicule sur les derniers kilomètres avant d'atteindre le niveau zéro du réservoir d'agent réducteur.

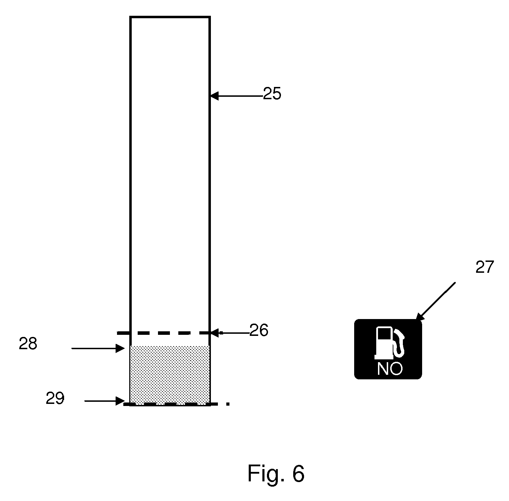

La figure 6 présente un exemple de système d'alerte pour avertir l'utilisateur du véhicule. Afin d'éviter que l'utilisateur soit impacté par l'immobilisation présentée ci-dessus, le système d'alerte-niveau bas 27 permet de l'avertir lorsque le niveau d'agent réducteur 28 dans le réservoir 25 d'agent réducteur passe en dessous d'un seuil bas 26. L'utilisateur est alors autorisé à parcourir un certain kilométrage avant que le véhicule ne soit arrêté lorsque le niveau d'agent réducteur 28 a atteint un niveau zéro 29, c'est-à-dire un niveau d'agent réducteur nul. L'utilisateur peut alors assurer le remplissage d'agent réducteur dans cet intervalle de temps.

L'invention a pour avantage d'augmenter le nombre de kilomètres maximum que l'utilisateur pourra parcourir entre deux remplissages d'agent réducteur ou améliorer les prestations pour l'utilisateur, telles que la consommation de carburant.

## Revendications

1. Procédé d'adaptation des réglages d'un moteur sur la consommation d'agent réducteur d'oxydes d'azote à bord d'un véhicule, le véhicule comprenant un moteur et un réservoir d'agent réducteur d'oxydes d'azote, **caractérisé en ce que** le procédé comprend :
- l'estimation d'une distance restante à parcourir par le véhicule avant que le réservoir d'agent réducteur soit vide en fonction de l'historique de la consommation en agent réducteur (34),
- la comparaison de l'estimation de la distance restante avec une distance prédéterminée représentative d'un objectif (53) de durabilité entre deux remplissages du réservoir d'agent réducteur d'oxydes d'azote,
- le réglage en air (38) et en carburant (39) injectés dans le moteur en fonction de la comparaison,
- le réglage de l'injection d'agent réducteur en fonction du réglage en air et en carburant, avec → d'une part une baisse de consommation en carburant au détriment de la consommation en agent réducteur quand les perspectives de consommation d'agent réducteur montrent qu'une consommation plus important est possible, et → d'autre part une baisse de consommation en agent réducteur au détriment de la consommation en carburant quand les perspectives de consommation en agent réducteur montrent qu'une consommation moins importante est souhaitée, de façon à ce que le véhicule atteigne l'objectif (53) de durabilité entre deux remplissages du réservoir en agent réducteur.

2. Procédé selon la revendication précédente, **caractérisé en ce que** le réglage d'air et de carburant est tel que la distance restante pour le véhicule soit égale à la distance prédéterminée.

3. Procédé de gestion selon la revendication précédente, **caractérisé en ce que**, si l'estimation de la distance restante est supérieure à la distance prédéterminée, les réglages en air et en carburant sont ajustés de façon à diminuer la quantité de carburant injecté.

4. Procédé selon l'une quelconque des revendications précédentes, **caractérisé en ce que**, si l'estimation de la distance restante est inférieure à la distance prédéterminée, les réglages en air et en carburant sont ajustés de façon à augmenter la quantité de carburant injecté.

5. Procédé selon l'une quelconque des revendications précédentes, **caractérisé en ce qu'**un signal d'alerte est déclenché si le niveau du réservoir d'agent réducteur est inférieur à une valeur seuil prédéterminée.

6. Procédé selon l'une quelconque des revendications précédentes, **caractérisé en ce que** le moteur du véhicule est mis hors de fonctionnement si le niveau du réservoir d'agent réducteur est nul.

7. Procédé selon l'une quelconque des revendications précédentes, **caractérisé en ce que** l'agent réducteur est de l'urée.

8. Procédé selon l'une quelconques des revendications précédentes, **caractérisé en ce que** l'estimation de la distance restante à parcourir est effectuée à intervalle de temps régulier ou à intervalle de distance parcourue régulier.

9. Procédé selon l'une quelconque des revendications précédentes, **caractérisé en ce que** le réglage d'air et de carburant injectés dans le moteur est aussi en fonction de l'atteinte d'un seuil de niveau d'agent réducteur dans le réservoir d'agent prédéterminé.

10. Véhicule comprenant un moteur et un réservoir d'agent réducteur d'oxydes d'azote, **caractérisé en ce que** le véhicule est spécialement conçu pour la mise en oeuvre du procédé selon l'une quelconque des revendications précédentes.

## Patentansprüche

1. Verfahren zum Anpassen der Einstellungen eines Motors hinsichtlich des Verbrauchs eines Reduktionsmittels für Stickstoffoxide an Bord eines Fahrzeugs, wobei das Fahrzeug einen Motor und einen Reduktionsmitteltank für Stickstoffoxide umfasst, **dadurch gekennzeichnet, dass** das Verfahren folgendes umfasst:
- die Schätzung einer verbleibenden Distanz, die vom Fahrzeug zurückzulegen ist, bevor der Reduktionsmitteltank für Stickstoffoxide leer ist, in Abhängigkeit von der Historie des Verbrauchs des Reduktionsmittels (34),
- der Vergleich der Schätzung der verbleibenden Distanz mit einer vorbestimmten Distanz, die repräsentativ für ein Ziel (53) an Nachhaltigkeit zwischen zwei Füllungen des Reduktionsmitteltanks für Stickstoffoxide ist,
- die Einstellung von Luft (38) und Kraftstoff (39), die in Abhängigkeit vom Vergleich in den Motor eingespritzt werden,
- die Einstellung der Einspritzung des Reduktionsmittels in Abhängigkeit von der Einstellung von Luft und Kraftstoff, mit → einerseits einer Senkung des Kraftstoffverbrauchs zum Nachteil des Verbrauchs an Reduktionsmittel, wenn der Ausblick auf den Verbrauch des Reduktionsmittels aufzeigt, dass ein höherer Verbrauch möglich ist, und → andererseits einer Senkung des Verbrauchs an Reduktionsmittel zum Nachteil des Kraftstoffverbrauchs, wenn der Ausblick auf den Verbrauch des Reduktionsmittels aufzeigt, dass ein niedrigerer Verbrauch gewünscht ist, sodass das Fahrzeug das Ziel (53) an Nachhaltigkeit zwischen zwei Füllungen des Reduktionsmitteltanks erreicht.

2. Verfahren nach dem vorherigen Anspruch, **dadurch gekennzeichnet, dass** die Einstellung von Luft und Kraftstoff dergestalt ist, dass die verbleibende Distanz für das Fahrzeug gleich der vorbestimmten Distanz ist.

3. Verfahren nach dem vorherigen Anspruch, **dadurch gekennzeichnet, dass** die Einstellungen von Luft und Kraftstoff, wenn die Schätzung der verbleibenden Distanz größer ist, als die vorbestimmte Distanz, angepasst werden, um die Menge an eingespritztem Kraftstoff zu senken.

4. Verfahren nach irgendeinem der vorherigen Ansprüche, **dadurch gekennzeichnet, dass** die Einstellungen von Luft und Kraftstoff, wenn die Schätzung der verbleibenden Distanz kleiner ist, als die vorbestimmte Distanz, angepasst werden, um die Menge an eingespritztem Kraftstoff zu erhöhen.

5. Verfahren nach irgendeinem der vorherigen Ansprüche, **dadurch gekennzeichnet, dass** ein Warnsignal ausgelöst wird, wenn der Füllstand des Reduktionsmitteltanks unter einem vorbestimmten Grenzwert liegt.

6. Verfahren nach irgendeinem der vorherigen Ansprüche, **dadurch gekennzeichnet, dass** der Motor des Fahrzeugs außer Betrieb genommen wird, wenn der Füllstand des Reduktionsmitteltanks gleich Null ist.

7. Verfahren nach irgendeinem der vorherigen Ansprüche, **dadurch gekennzeichnet, dass** das Reduktionsmittel Harnstoff ist.

8. Verfahren nach irgendeinem der vorherigen Ansprüche, **dadurch gekennzeichnet, dass** die Schätzung der verbleibenden Distanz, die zurückzulegen ist, in einem regelmäßigen Zeitintervall stattfindet, oder in einem regelmäßigen Intervall der zurückgelegten Distanz.

9. Verfahren nach irgendeinem der vorherigen Ansprüche, **dadurch gekennzeichnet, dass** die Einstellung von Luft und Kraftstoff, die in den Motor eingespritzt werden, auch vom Erreichen eines Grenzwerts für den vorbestimmten Füllstand des Reduktionsmittels im Reduktionsmitteltank abhängt.

10. Fahrzeug, einen Motor und einen Reduktionsmitteltank für Stickstoffoxide umfassend, **dadurch gekennzeichnet, dass** das Fahrzeug eigens konzipiert ist, um das Verfahren nach irgendeinem der vorherigen Ansprüche anzuwenden.

## Claims

1. Method for adapting settings of an engine to the consumption of a nitrogen oxide reducing agent on board a vehicle, the vehicle comprising an engine and a tank of nitrogen oxide reducing agent, **characterised in that** the method comprises:
- the estimation of a distance remaining to be travelled by the vehicle before the tank of reducing agent is empty according to the history of the consumption of reducing agent (34),
- comparison of the estimation of the remaining distance with a predetermined distance representing an objective (53) of sustainability between two fillings of the tank of nitrogen oxide reducing agent,
- adjustment of air (38) and fuel (39) injected into the engine according to the comparison,
- adjustment of the injection of reducing agent according to the air and fuel setting, with → firstly a reduction in the consumption of fuel to the detriment of the consumption of reducing agent when the forecasts of consumption of reducing agent show that a greater consumption is possible, and → secondly a reduction in consumption of reducing agent to the detriment of the consumption of fuel when the forecasts of consumption of reducing agent show that a lower consumption is required, so that the vehicle achieves the objective (53) of sustainability between two fillings of the tank of reducing agent.

2. Method according to the preceding claim, **characterised in that** the setting of air and fuel is such that the remaining distance for the vehicle is equal to the predetermined distance.

3. Management method according to the preceding claim, **characterised in that**, if the estimation of the remaining distance is greater than the predetermined distance, the air and fuel settings are adjusted so as to reduce the quantity of fuel injected.

4. Method according to any one of the preceding claims, **characterised in that**, if the estimation of the remaining distance is less than the predetermined distance, the air and fuel settings are adjusted so as to increase the quantity of fuel injected.

5. Method according to any one of the preceding claims, **characterised in that** an alert signal is triggered if the level in the tank of reducing agent is below a predetermined threshold value.

6. Method according to any one of the preceding claims, **characterised in that** the engine of the vehicle is switched off if the level in the tank of reducing agent is zero.

7. Method according to any one of the preceding claims, **characterised in that** the reducing agent is urea.

8. Method according to any one of the preceding claims, **characterised in that** the estimation of the remaining distance to be travelled is made at regular time intervals or at regular travel-distance intervals.

9. Method according to any one of the preceding claims, **characterised in that** the setting for air and fuel injected into engine is also dependent on reaching a predetermined threshold level of reducing agent in the tank of agent.

10. Vehicle comprising an engine and a tank of nitrogen oxide reducing agent, **characterised in that** the vehicle is specially designed for implementing the method according to any one of the preceding claims.
